# EUROPÄISCHE PATENTSCHRIFT

(11) **EP 3 896 770 B1**
(45) Veröffentlichungstag und Bekanntmachung des Hinweises auf die Patenterteilung: **30.07.2025**
(21) Anmeldenummer: 21164133.7
(22) Anmeldetag: 23.03.2021
(51) Int. Cl.: H01M 10/056, C01B 17/22, H01B 1/10

(54) **BESCHICHTETES ELEKTROLYTMATERIAL, VERFAHREN ZU DESSEN HERSTELLUNG, SOWIE DESSEN VERWENDUNG**
COATED ELECTROLYTE MATERIAL, METHOD FOR PRODUCING SAME AND ITS USE
MATÉRIAU ÉLECTROLYTIQUE REVÊTU, SON PROCÉDÉ DE FABRICATION, AINSI QUE SON UTILISATION

(30) Priorität: 16.04.2020 DE 102020204801
(43) Veröffentlichungstag der Anmeldung: 20.10.2021
(73) Patentinhaber: Fraunhofer-Gesellschaft zur Förderung der angewandten Forschung e.V., 80686 München (DE); Mercedes-Benz Group AG, 70372 Stuttgart (DE)
(72) Erfinder: Giffin, Dr. Guinevere, 97082 Würzburg (DE); Hofmann, Michael, 97082 Würzburg (DE); Guntow, Dr. Uwe, 97082 Würzburg (DE); Kapuschinski, Martina, 97082 Würzburg (DE); Hansen, Michael Chang, 70178 Stuttgart (DE); Soczka-Guth, Dr. Thomas, 89601 Schelklingen (DE); Nietfeld, Franz, 73730 Esslingen (DE)
(74) Vertreter: Pfenning, Meinig & Partner mbB

(56) Entgegenhaltungen:
- US-A1- 2012 328 958
- BOARETTO NICOLA ET AL: "Optimization of the transport and mechanical properties of polysiloxane/polyether hybrid polymer electrolytes", ELECTROCHIMICA ACTA, vol. 241, 1 July 2017 (2017-07-01), AMSTERDAM, NL, pages 477 - 486, XP055837386, ISSN: 0013-4686, DOI: 10.1016/j.electacta.2017.04.133
- BOARETTO NICOLA ET AL: "Highly Conducting 3D-Hybrid Polymer Electrolytes for Lithium Batteries Based on Siloxane Networks and Cross-Linked Organic Polar Interphases", CHEMISTRY OF MATERIALS, vol. 26, no. 22, 25 November 2014 (2014-11-25), US, pages 6339 - 6350, XP055837384, ISSN: 0897-4756, DOI: 10.1021/cm5024647

## Beschreibung

Die vorliegende Erfindung betrifft ein beschichtetes Elektrolytmaterial, umfassend mindestens ein sulfidisches partikuläres Lithium-Ionen-leitfähiges Elektrolytmaterial, welches zumindest bereichsweise mindestens eine Beschichtung aufweist, die mindestens ein spezielles anorganisch-organisches Hybridpolymer enthält oder daraus besteht. Zudem betrifft die vorliegende Erfindung ein Verfahren zur Herstellung des beschichteten Elektrolytmaterials, einen das beschichtete Elektrolytmaterial umfassenden Festkörperelektrolyten sowie einen den Festkörperelektrolyten umfassenden Energiespeicher. Die vorliegende Erfindung betrifft ferner auch die Verwendung des beschichteten Elektrolytmaterials, des Festkörperelektrolyten und des Energiespeichers.

Um die Emission von Treibhausgasen zu reduzieren, ist es unerlässlich, neue leistungsfähige elektrochemische Speicher für mobile Anwendungen einzuführen. Lithium-Ionen-leitende Festkörperbatterien (solid-state lithium batteries, all-solid-state lithium batteries) sind eine spezielle Bauform von Batterien, bei denen die beiden Elektroden und auch der Elektrolyt (Festkörperelektrolyt, optionaler Elektrolytseparator) aus festen Materialien bestehen und eine sehr hohe Energiedichte liefern können. Sulfidische Festkörperelektrolyte weisen bei Raumtemperatur sehr hohe lonenleitfähigkeiten von bis zu 10⁻² S cm⁻¹ und, aufgrund der mechanischen Eigenschaften, eine gute Verarbeitbarkeit auf. Die geringe chemische Stabilität an feuchter Luft ist ein erheblicher Nachteil dieser Sulfidelektrolyte. Sie sind hygroskopischer Natur und reagieren mit Wasser unter Bildung von H₂S. Alle Prozesse an denen Sulfidelektrolyte beteiligt sind, müssen daher in einer trockenen Schutzgasatmosphäre durchgeführt werden. Für einen sicheren Betrieb der Batterie sind zudem Sicherheitsmaßnahmen notwendig, um den Kontakt des Sulfidelektrolyten mit Wasser/Luft zu vermeiden. Zugleich weisen die meisten Sulfidelektrolyte eine geringe Stabilität gegenüber Lithium auf. Dabei bilden sich unerwünschte Zersetzungsprodukte, die den Grenzflächenwiderstand vergrößern.

Muramatsu et al. (H. Muramatsu, A. Hayashi, T. Ohtomo, S. Hama, M. Tatsumisago, Solid State lonics, 2011, 182, 116-119) beschreiben eine strukturelle Modifizierung von Sulfidelektrolyten, in der ein Li₂S-P₂S₅-Glas bzw. eine Li₂S-P₂S₅-Glaskeramik eine relativ hohe chemische Stabilität aufweisen. Raman-Spektroskopie zeigte, dass das 75Li₂S·25P₂S₅ (mol%) Glas bzw. die Glaskeramik aus Li⁺ und PS₄³⁻-Ionen keine offensichtlichen strukturellen Veränderungen bei Exposition gegenüber der Luft aufwiesen. Die Zusammensetzung 75Li₂S·25P₂S₅ erzeugte die geringste Menge an H₂S in Li₂S-P₂S₅-Binärsystemen.

Gemäß Hayashi et al. (A. Hayashi, H. Muramatsu, T. Ohtomo, S. Hamab, M. Tatsumisago, J. Mater. Chem. A, 2013, 1, 6320-6326) entfernen einige Metalloxide wie ZnO, Fe₂O₃ und Bi₂O₃ H₂S-Gas und wirken als H₂S-Absorber: MₓO_{y} + H₂S → MₓS_{y} + H₂O. Durch Verbundelektrolyte eines Li₃PS₄-Glases und eines der Metalloxide sollte die Stabilität gegenüber Feuchtigkeit verbessert werden. Die erzeugten H₂S-Mengen nahmen in der Größenordnung des Verbundes mit Fe₂O₃, ZnO und Bi₂O₃ ab.

In Ohtomo et al. (T. Ohtomo, A. Hayashi, M. Tatsumisago, K. Kawamoto, Journal of Non-Crystalline Solids, 2013, 364, 57-61) wurde die H₂S-Gasbildung durch die Zugabe von Li₂O bei der Synthese eines sulfidischen Glaselektrolyten (70Li₂S·30P₂S₅ (mol%)) vermindert.

B. Zheng et al. (B. Zheng, J. Zhu, H. Wang, M. Feng, E. Umeshbabu, Y. Li, Q.-H. Wu, Y. Yang, ACS Appl. Mater. Interfaces, 2018, 10, 25473-25482) schlagen einen Ansatz vor, in dem sie eine geringe Menge einer ionischen Flüssigkeit einsetzen, um die Stabilität an der Li₁₀SnP₂S₁₂ (LSPS) Festkörperelektrolyt-/Li-Metall-Grenzfläche zu verbessern.

Ausgehend hiervon war es somit die Aufgabe der vorliegenden Erfindung ein Elektrolytmaterial anzugeben, welches einen verbesserten Schutz gegenüber Feuchtigkeit und eine erhöhte Stabilität gegenüber Lithium aufweist.

Diese Aufgabe wird bezüglich eines beschichteten Elektrolytmaterials mit den Merkmalen des Patentanspruchs 1, bezüglich eines Festkörperelektrolyten mit den Merkmalen des Patentanspruchs 7 bezüglich eines Energiespeichers mit den Merkmalen des Patentanspruchs 8 und bezüglich eines Verfahrens zur Herstellung des beschichteten Elektrolytmaterials mit den Merkmalen des Patentanspruchs 10 gelöst. In Patentanspruch 9 werden Verwendungsmöglichkeiten des beschichteten Elektrolytmaterials, des Festkörperelektrolyten und des Energiespeichers angegeben. Die jeweilig abhängigen Patentansprüche stellen dabei vorteilhafte Weiterbildungen dar.

Erfindungsgemäß wird somit ein beschichtetes Elektrolytmaterial angegeben, das mindestens ein sulfidisches partikuläres Lithium-Ionen-leitfähiges Elektrolytmaterial umfasst, welches zumindest bereichsweise mindestens eine Beschichtung aufweist. Die mindestens eine Beschichtung enthält mindestens ein anorganisch-organisches Hybridpolymer oder besteht daraus, wobei das mindestens eine anorganisch-organische Hybridpolymer (mittels Vernetzung) aus mindestens einer vernetzbaren Vorstufe herstellbar (oder hergestellt) ist, die eine oder mehrere Struktureinheiten gemäß der folgenden Formel (I) 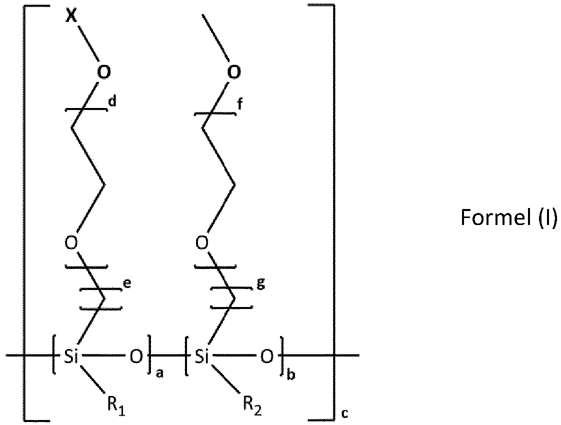 umfasst oder daraus besteht, wobei
- X: ausgewählt ist aus der Gruppe bestehend aus Vinyl und Epoxy,
- R₁: ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
- R₂: ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
- a: eine Zahl von 1 bis 20 ist,
- b: eine Zahl von 1 bis 20 ist,
- c: eine Zahl von 1 bis 30 ist,
- d: eine Zahl von 0 bis 20 ist,
- e: 2 oder 3 ist,
- f: eine Zahl von 1 bis 20 ist, und
- g: 2 oder 3 ist.

Besonders bevorzugt ist R₁ Methyl und/oder R₂ Methyl. Handelt es sich bei R₁ und/oder R₂ um -O-, dann stellt dieses -O- eine verbrückende Gruppierung (d.h. ein verbrückendes Sauerstoffatom) zu einem Si-Atom der gleichen Struktureinheit oder einer weiteren Struktureinheit gemäß der Formel (I) der mindestens einen vernetzbaren Vorstufe dar, so dass sich eine Si-O-Si-Gruppierung ergibt, in welcher das O-Atom zwei Si-Atome verbrückt. Für beide Si-Atome entspricht die verbrückende Gruppierung -O- dann dem an das jeweilige Si-Atom gebundenen Rest R₁ oder R₂.

Das sulfidische partikuläre Lithium-lonen-leitfähige Elektrolytmaterial weist eine Beschichtung auf, die ein spezielles anorganisch-organisches Hybridpolymer enthält oder daraus besteht. Anorganisch-organische Hybridpolymere sind auch bekannt unter dem Namen ORMOCER^{®}e.

Das in der Beschichtung enthaltene spezielle anorganisch-organische Hybridpolymer kann mittels Vernetzung aus einer vernetzbaren Vorstufe gemäß der zuvor dargestellten Strukturformel hergestellt werden. Hierfür weist die vernetzbare Vorstufe vernetzbare funktionelle Gruppen, nämlich Vinylgruppen und/oder Epoxygruppen auf. Die Vernetzung kann beispielsweise mittels Polymerisation, vorzugsweise unter Verwendung eines Katalysators, z.B. Dibenzoylperoxid, erfolgen.

Aufgrund der Beschichtung mit dem speziellen anorganisch-organischen Hybridpolymer weist das erfindungsgemäße beschichtete Elektrolytmaterial unerwartete multifunktionelle Eigenschaften auf. Zunächst weist das sulfidische Elektrolytmaterial aufgrund der Beschichtung einen verbesserten Schutz gegenüber Feuchtigkeit/Wasser bzw. Luftkontakt auf, weswegen es bei Kontakt des Elektrolytmaterials mit Feuchtigkeit/Wasser bzw. Luft zu einer verringerten Entwicklung von Schwefelwasserstoffgas kommt. Zudem weist das sulfidische Elektrolytmaterial aufgrund der Beschichtung eine erhöhte Stabilität gegenüber Lithium auf. Im Weiteren bleibt die hohe ionische Leitfähigkeit des sulfidischen Elektrolytmaterials trotz der vorhandenen Beschichtung mit dem anorganisch-organischen Hybridpolymer im Wesentlichen erhalten. Der Zusatz von Lithium-Salzen zum Hybridpolymer zur Erhöhung der ionischen Leitfähigkeit ist deshalb nicht nötig. Ferner verbessert sich durch die Beschichtung des sulfidischen Elektrolytmaterials die Verarbeitbarkeit im Vergleich zum reinen sulfidischen Elektrolytmaterials, da durch die zusätzliche Binderwirkung des Polymers das Auftreten von Feinstäuben verringert wird.

Durch die Beschichtung des sulfidischen Elektrolytmaterials mit einer Beschichtung, welches das spezielle anorganisch-organische Hybridpolymer - herstellbar aus einer Vorstufe gemäß der oben gezeigten Strukturformel - enthält oder daraus besteht, wird somit ein Elektrolytmaterial erhalten, welches einen verbesserten Schutz gegenüber Feuchtigkeit und eine erhöhte Stabilität gegenüber Lithium aufweist, wobei gleichzeitig die hohe ionische Leitfähigkeit erhalten bleibt und eine verbesserte Verarbeitbarkeit erreicht wird.

Eine bevorzugte Ausführungsform des erfindungsgemäßen beschichteten Elektrolytmaterials zeichnet sich dadurch aus, dass das mindestens eine sulfidische partikuläre Lithium-lonen-leitfähige Elektrolytmaterial ausgewählt ist aus der Gruppe bestehend aus
- Materialien mit der allgemeinen Formel Li₁₁₋ₓ(M_{1-y}M'_{y})₂₋ₓP₁₊ₓ(S_{12-z}M"_{z}), wobei M ausgewählt ist aus der Gruppe bestehend aus Ge, Sn und Si, wobei M' ausgewählt ist aus der Gruppe bestehend aus Ge, Sn und Si, wobei M" ausgewählt ist aus der Gruppe bestehend aus O, Se, F, Cl, Br und I, wobei x eine Zahl von 0 bis 2 ist, wobei y eine Zahl von 0 bis 1 ist, und wobei z eine Zahl von 0 bis 3 ist, vorzugsweise Li₁₀SnP₂S₁₂,
- Thio-LISICON-Materialien mit der allgemeinen Formel Li₄₋ₓM₁₋ₓM'ₓS₄, wobei M ausgewählt ist aus der Gruppe bestehend aus Sn, Si, Ge und Zr, wobei M' ausgewählt ist aus der Gruppe bestehend aus P, Al, Zn und Ga, und wobei x eine Zahl von 0 bis 1 ist, vorzugweise Li₄GeS₄, Li₄SnS₄,
- den Thio-LISICON-Materialien Li₂GeS₃; Li₂ZnGeS₄; Li₄₋₂ₓZnₓGeS₄, wobei x eine Zahl von 0 bis 1 ist; Li₅GaS₄; Li_{4+x+y}(Ge_{1-y-x}Gaₓ)S₄, wobei x eine Zahl von 0 bis 1 ist und y eine Zahl von 0 bis 1 ist; Li₂₋ₓSn₁₋ₓAsₓS₄, wobei x eine Zahl von 0 bis 1 ist,
- Li-P-S-basierten Glasen und Glaskeramiken mit der allgemeinen Formel xLi₂S·(100-x)P₂S₅, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- Li-P-S-basierten Glasen und Glaskeramiken mit der allgemeinen Formel xLi₂S·(100-x)B₂S₃, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- Li-P-S-basierten Glasen und Glaskeramiken mit der allgemeinen Formel xLi₂S·(100-x)SiS₂, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- dotierten Glaskeramiken ausgewählt aus der Gruppe bestehend aus Li₇P_{2,9}S_{10,85}Mo_{0,01}; Li₇P_{2,9}Mn_{0,1}S_{10,7}I_{0,3}; Li₇P₂S₈I; Li₆PS₅X, wobei X ausgewählt ist aus der Gruppe bestehend aus Cl, Br und I,
- Argyroditen und dotierten Argyroditen ausgewählt aus der Gruppe bestehend aus Li_{9,54}Si_{1,74}P_{1,44}S_{11,7}Cl_{0,3}, Li₁₀SiP₂S₁₂Cl_{0,3}, Li₁₁AlP₂S₁₂, Li₃P_{0,98}Sb_{0,02}S_{3,95}O_{0,05}, Li₄GeS₄, 0,4LiI-0,24GeS₂-0,06Ga₂S₃-0,3Li₂S, 50Li₂S-50GeS₂, sowie
- Mischungen hiervon.

Ganz besonders bevorzugt handelt es sich bei dem mindestens einen sulfidischen partikulären Lithium-Ionen-leitfähigen Elektrolytmaterial um Li₁₀SnP₂S₁₂.

Gemäß einer weiteren bevorzugten Ausführungsform des erfindungsgemäßen beschichteten Elektrolytmaterials weist das mindestens eine sulfidische partikuläre Lithium-lonen-leitfähige Elektrolytmaterial eine Primär-Partikelgröße im Bereich von 50 nm bis 10 µm, bevorzugt im Bereich von 100 nm bis 500 nm, besonders bevorzugt im Bereich von 100 nm bis 300 nm, auf. Die Primär-Partikelgröße kann beispielsweise mittels DIN ISO 22412, bevorzugt unter inerten Bedingungen, bestimmt werden.

Eine weitere bevorzugte Ausführungsform des erfindungsgemäßen beschichteten Elektrolytmaterials dadurch gekennzeichnet, dass die mindestens eine vernetzbare Vorstufe durch eine Hydrolyse-Kondensation-Reaktion von mindestens einem Polyether-funktionalisierten Alkoxysilan, vorzugsweise von mindestens zwei Polyether-funktionalisierten Alkoxysilanen, herstellbar ist, wobei das mindestens eine Polyether-funktionalisierte Alkoxysilan vorzugsweise ausgewählt ist aus der Gruppe bestehend aus Triethylenglykol-α-vinyl-ω-ethyl-(methyl)diethoxysilanether, Triethylenglykol-α-methyl-ω-propyl-(methyl)diethoxysilanether und Mischungen hiervon. Unter Verwendung einer solch speziellen vernetzbaren Vorstufe kann eine Beschichtung erhalten werden, durch die ein besonders guter Schutz des sulfidischen Elektrolytmaterials vor Feuchtigkeit und eine besonders hohe Stabilität des sulfidischen Elektrolytmaterials gegenüber Lithium erreicht wird.

Eine weitere bevorzugte Ausführungsform des erfindungsgemäßen beschichteten Elektrolytmaterials zeichnet sich dadurch aus, dass die mindestens eine Beschichtung
- eine Schichtdicke im Bereich von 1 bis 700 nm, bevorzugt von 1 bis 500 nm, besonders bevorzugt von 1 bis 300 nm, ganz besonders bevorzugt von 1 bis 200 nm, aufweist, und/oder
- eine nanostrukturierte Beschichtung ist, und/oder
- sich erst ab Temperaturen oberhalb von 200 °C thermisch zersetzt.

Durch eine Schichtdicke der Beschichtung in den genannten Bereichen kann einerseits ein guter Schutz des sulfidischen Elektrolytmaterials gegenüber Feuchtigkeit und eine hohe Stabilität des sulfidischen Elektrolytmaterials gegenüber Lithium erreicht werden. Andererseits weist der beschichtete Elektrolyt bei dieser Schichtdicke trotz der Beschichtung eine hohe ionische Leitfähigkeit auf. Die Schichtdicke der Beschichtung kann beispielsweise mittels Transmissionselektronenmikroskopie, mittels Rasterelektronenmikroskopie an der Partikelquerschnittsfläche oder mittels Röntgenphotonenspektroskopie (Tiefenprofil) bestimmt werden.

In einer weiteren bevorzugten Ausführungsform des erfindungsgemäßen beschichteten Elektrolytmaterials weist das beschichtet Elektrolytmaterial eine Lithium-Ionen-Leitfähigkeit bei einer Temperatur von 25 °C im Bereich von 1 · 10⁻⁷ S/cm bis 1 S/cm, bevorzugt im Bereich von 1 · 10⁻⁶ S/cm bis 1 · 10⁻¹ S/cm, besonders bevorzugt im Bereich von 1 · 10⁻⁴ S/cm bis 1 · 10⁻¹ S/cm, auf.

Der beschichtete Elektrolyt weist trotz der Beschichtung eine besonders hohe Lithium-ionische Leitfähigkeit auf. Die Lithium-Ionen-Leitfähigkeit des beschichteten Elektrolyten kann beispielsweise mittels temperaturabhängiger Impedanzspektroskopie bestimmt werden.

Die vorliegende Erfindung betrifft zudem einen Festkörperelektrolyten, der das erfindungsgemäße beschichtete Elektrolytmaterial umfasst oder daraus besteht.

Ferner betrifft die vorliegende Erfindung einen Energiespeicher, der den erfindungsgemäßen Festkörperelektrolyten umfasst.

Die vorliegende Erfindung betrifft außerdem die Verwendung des erfindungsgemäßen beschichteten Elektrolytmaterials, des erfindungsgemäßen Festkörperelektrolyten oder des erfindungsgemäßen Energiespeichers in Fahrzeugen, vorzugsweise e-PKWs, e-LKWs, e-Bussen.

Im Weiteren betrifft die vorliegende Erfindung auch ein Verfahren zur Herstellung von erfindungsgemäßem beschichtetem Elektrolytmaterial, bei welchem
a) mindestens ein sulfidisches partikuläres Lithium-Ionen-leitfähiges Elektrolytmaterial mit mindestens einer vernetzbaren Vorstufe mindestens eines anorganisch-organischen Hybridpolymers zu einer Mischung vermischt wird, und
b) die in der Mischung vorliegende mindestens eine vernetzbare Vorstufe des mindestens einen anorganisch-organischen Hybridpolymers zu dem mindestens einen anorganisch-organischen Hybridpolymer vernetzt wird, wobei mit dem mindestens einen anorganisch-organischen Hybridpolymer beschichtetes Elektrolytmaterial entsteht,
   wobei die mindestens eine vernetzbare Vorstufe eine oder mehrere Struktureinheiten gemäß der folgenden Formel (I) 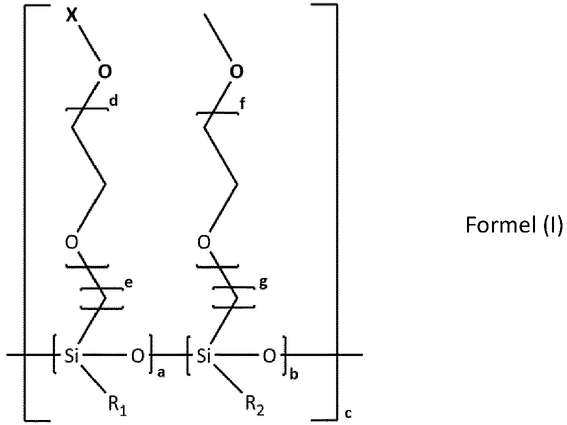
   umfasst oder daraus besteht, wobei
      - X: ausgewählt ist aus der Gruppe bestehend aus Vinyl und Epoxy,
      - R₁: ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
      - R₂: ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
      - a: eine Zahl von 1 bis 20 ist,
      - b: eine Zahl von 1 bis 20 ist,
      - c: eine Zahl von 1 bis 30 ist,
      - d: eine Zahl von 0 bis 20 ist,
      - e: 2 oder 3 ist,
      - f: eine Zahl von 1 bis 20 ist, und
      - g: 2 oder 3 ist.

Besonders bevorzugt ist R₁ Methyl und/oder R₂ Methyl. Handelt es sich bei R₁ und/oder R₂ um -O-, dann stellt dieses -O- eine verbrückende Gruppierung (d.h. ein verbrückendes Sauerstoffatom) zu einem Si-Atom der gleichen Struktureinheit oder einer weiteren Struktureinheit gemäß der Formel (I) der mindestens einen vernetzbaren Vorstufe dar, so dass sich eine Si-O-Si-Gruppierung ergibt, in welcher das O-Atom zwei Si-Atome verbrückt. Für beide Si-Atome entspricht die verbrückende Gruppierung -O- dann dem an das jeweilige Si-Atom gebundenen Rest R₁ oder R₂.

Mit dem erfindungsgemäßen Verfahren wird das erfindungsgemäße beschichtete Elektrolytmaterial in einem zweistufigen Prozess hergestellt.

In Schritt a) erfolgt hierbei zunächst das Vermischen der einzelnen Komponenten (mit oder ohne Zusatz eines Lösungsmittels, z.B. Dichlormethan) zu einer Mischung. Durch das Vermischen wird vorzugsweise das mindestens eine sulfidische partikuläre Lithium-lonen-leitfähige Elektrolytmaterial mit der mindestens einen vernetzbaren Vorstufe des mindestens einen anorganisch-organischen Hybridpolymers zumindest teilweise beschichtet. Das Vermischen der Komponenten in Schritt a) kann beispielsweise durch Verrühren und/oder durch einfaches Mischen erfolgen. Die zu vermischenden Komponenten können zusätzlich zum sulfidischen partikulären Lithium-Ionen-leitfähigen Elektrolytmaterial, zur vernetzbaren Vorstufe des mindestens einen anorganisch-organischen Hybridpolymers und zum optional verwendeten Lösungsmittel auch optional einen Katalysator (für die anschließende Vernetzung), z.B. Dibenzoylperoxid, umfassen.

In Schritt b) erfolgt schließlich die Vernetzung der vernetzbaren Vorstufe des anorganisch-organischen Hybridpolymers zum anorganisch-organischen Hybridpolymer, wodurch das erfindungsgemäße beschichtete Elektrolytmaterial erhalten wird. Die Vernetzung in Schritt b) kann beispielsweise mittels Polymerisation, vorzugsweise unter Verwendung eines Katalysators, z.B. Dibenzoylperoxid, erfolgen. Bei einem Lösungsmittel-basierten Prozess wird vor der Vernetzung das Lösungsmittel entfernt.

Eine bevorzugte Variante des erfindungsgemäßen Verfahrens zeichnet sich dadurch aus, dass die mindestens eine vernetzbare Vorstufe des mindestens einen anorganisch-organischen Hybridpolymers durch Reaktion von mindestens einem Polyether-funktionalisierten Alkoxysilan, vorzugsweise von mindestens zwei Polyether-funktionalisierten Alkoxysilanen, durch eine Hydrolyse-Kondensation-Reaktion hergestellt wird, wobei das mindestens eine Polyether-funktionalisierte Alkoxysilan vorzugsweise ausgewählt ist aus der Gruppe bestehend aus Triethylenglykol-α-vinyl-ω-ethyl-(methyl)diethoxysilanether, Triethylenglykol-α-methyl-ω-propyl-(methyl)diethoxysilanether und Mischungen hiervon. Unter Verwendung einer solch speziellen vernetzbaren Vorstufe kann eine Beschichtung erhalten werden, durch die ein besonders guter Schutz des sulfidischen Elektrolytmaterials vor Feuchtigkeit und eine besonders hohe Stabilität des sulfidischen Elektrolytmaterials gegenüber Lithium erreicht wird.

Gemäß einer weiteren bevorzugten Variante des erfindungsgemäßen Verfahrens wird in Schritt a) zusätzlich ein Lösungsmittel, vorzugsweise Dichlormethan, verwendet und mit dem mindestens einen sulfidischen partikulären Lithium-lonen-leitfähigen Elektrolytmaterial und der mindestens einen vernetzbaren Vorstufe des mindestens einen anorganisch-organischen Hybridpolymers vermischt, wobei das Lösungsmittel vor Schritt b) aus der Mischung entfernt wird. Durch Verwendung eines Lösungsmittels kann ein einfacheres und besseres Vermischen der Komponenten erreicht werden. Das bessere Vermischen führt zu einer gleichmäßigeren Beschichtung des sulfidischen Elektrolytmaterials, wodurch ein noch besserer Schutz des sulfidischen Elektrolytmaterials vor Feuchtigkeit und eine noch höhere Stabilität des sulfidischen Elektrolytmaterials gegenüber Lithium erreicht wird.

Eine weitere bevorzugte Variante des erfindungsgemäßen Verfahrens ist dadurch gekennzeichnet, dass in Schritt a) zusätzlich mindestens ein Katalysator, vorzugsweise Dibenzoylperoxid, mit dem mindestens einen sulfidischen partikulären Lithium-lonen-leitfähigen Elektrolytmaterial und der mindestens einen vernetzbaren Vorstufe des mindestens einen anorganisch-organischen Hybridpolymers vermischt wird, wobei die Vernetzung in Schritt b) durch Polymerisation erfolgt. Durch die Verwendung eines Katalysators kann eine schnellere und einfachere Vernetzung durch Polymerisation erreicht werden. Insbesondere kann die Vernetzung durch Verwendung eines Katalysators bei niedrigeren Temperaturen durchgeführt werden.

Eine weitere bevorzugte Variante des erfindungsgemäßen Verfahrens zeichnet sich dadurch aus, dass die Mischung in Schritt b) einer Temperaturbehandlung bei einer Temperatur im Bereich von 20 °C bis 140 °C, bevorzugt im Bereich von 60 °C bis 100 °C, besonders bevorzugt im Bereich von 70 °C bis 90 °C, für einen Zeitraum von 10 Minuten bis 72 Stunden, bevorzugt von 30 Minuten bis 36 Stunden, besonders bevorzugt von 60 Minuten bis 24 Stunden, unterzogen wird. Durch eine solche Temperaturbehandlung kann eine besonders gute Vernetzung und somit eine sehr gleichmäßige Beschichtung erreicht werden, wodurch ein noch besserer Schutz des sulfidischen Elektrolytmaterials vor Feuchtigkeit und eine noch höhere Stabilität des sulfidischen Elektrolytmaterials gegenüber Lithium erreicht wird.

Gemäß einer weiteren bevorzugten Variante des erfindungsgemäßen Verfahrens erfolgt das Vermischen in Schritt a) durch Rühren und/oder Mischen, wobei durch das Rühren vorzugsweise eine homogene Mischung erhalten wird. Durch Herstellen einer homogenen Mischung kann in der Folge eine besonders gleichmäßige Beschichtung erreicht werden, wodurch ein noch besserer Schutz des sulfidischen Elektrolytmaterials vor Feuchtigkeit und eine noch höhere Stabilität des sulfidischen Elektrolytmaterials gegenüber Lithium erreicht wird.

Anhand der nachfolgenden Figuren und Beispiele soll die vorliegende Erfindung näher erläutert werden, ohne diese auf die hier gezeigten spezifischen Ausführungsformen und Parameter zu beschränken.

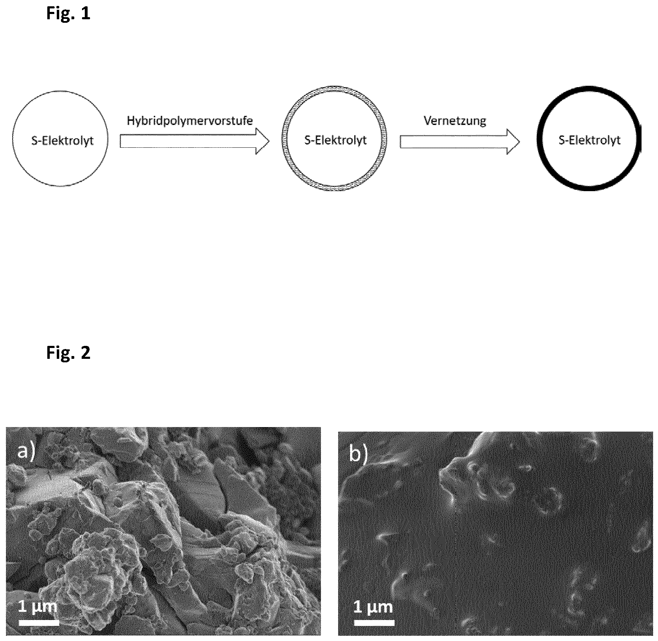

Fig. 1 zeigt schematisch eine beispielhafte zweistufige Herstellung des erfindungsgemäßen beschichteten Elektrolytmaterials. Links ist ein Partikel eines als Ausgangsmaterial eingesetzten sulfidischen partikulären Lithium-Ionen-leitfähigen Elektrolytmaterials ("S-Elektrolyt") dargestellt. Im ersten Verfahrensschritt wird das sulfidische partikuläre Lithium-lonen-leitfähige Elektrolytmaterial mit einer vernetzbaren Vorstufe eines anorganisch-organischen Hybridpolymers ("Hybridpolymervorstufe") vermischt. Hierdurch wird das sulfidische partikuläre Lithium-lonen-leitfähige Elektrolytmaterial mit der vernetzbaren Vorstufe des anorganisch-organischen Hybridpolymers zumindest teilweise beschichtet. Exemplarisch ist in der Mitte des Schemas in Fig. 1 ein solch beschichteter Partikel des partikulären Elektrolytmaterials dargestellt. Im zweiten Verfahrensschritt wird die vernetzbare Vorstufe des anorganisch-organischen Hybridpolymers zu dem mindestens einen anorganisch-organischen Hybridpolymer vernetzt. Hierdurch wird ein erfindungsgemäßes mit dem anorganisch-organischen Hybridpolymer beschichtetes Elektrolytmaterial erhalten, wovon rechts in Fig. 1 exemplarisch ein Partikel dargestellt ist.

Fig. 2 zeigt zwei REM-Aufnahmen, wobei in Abbildung a) die Aufnahme eines reinen (d.h. unbeschichteten) sulfidischen Elektrolytmaterials und in Abbildung b) die Aufnahme eines erfindungsgemäßen beschichteten sulfidischen Elektrolytmaterials zu sehen ist.

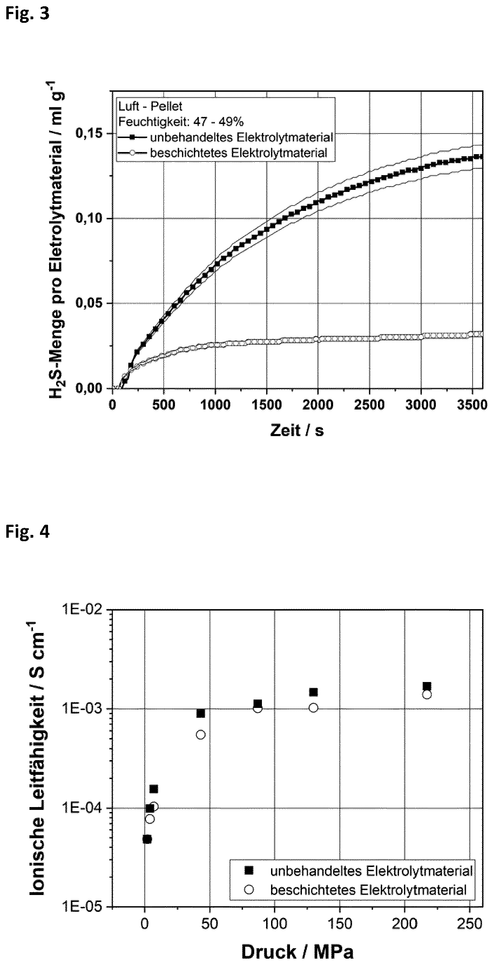

Fig. 3 zeigt die H₂S-Gasentwicklung eines reinen (d.h. unbeschichteten bzw. unbehandelten) sulfidischen Elektrolytmaterials sowie eines erfindungsgemäßen beschichteten sulfidischen Elektrolytmaterials bei Luftkontakt (Luftfeuchtigkeit 47 - 49 %) in Abhängigkeit der Zeit. Es ist zu erkennen, dass durch die Beschichtung des sulfidischen Elektrolytmaterials mit dem speziellen anorganisch-organischen Hybridpolymer die Schwefelwasserstoffentwicklung im Vergleich zum reinen (d.h. unbeschichteten bzw. unbehandelten) sulfidischen Elektrolyten bei Luftkontakt (1 Stunde, Luftfeuchtigkeit 47 - 49 %) um einen Faktor von > 4 verringert ist. Das erfindungsgemäße beschichtete Elektrolytmaterial weist somit aufgrund der Beschichtung mit dem speziellen anorganisch-organischen Hybridpolymer einen verbesserten Schutz gegenüber Feuchtigkeit/Wasser bzw. Luftkontakt auf.

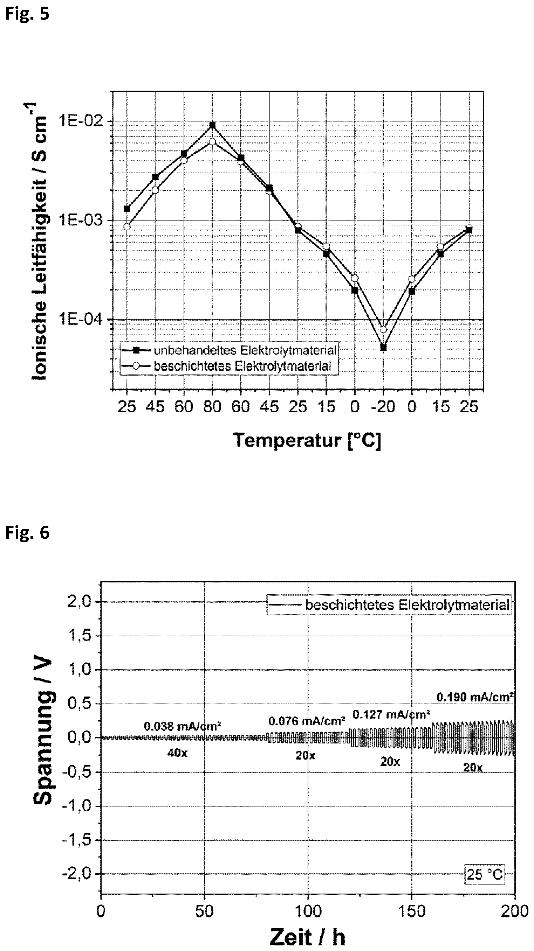

Fig. 4 zeigt die ionische Leitfähigkeit eines reinen (d.h. unbeschichteten bzw. unbehandelten) sulfidischen Elektrolytmaterials sowie eines erfindungsgemäßen beschichteten sulfidischen Elektrolytmaterials in Abhängigkeit des Drucks. Fig. 5 zeigt die ionische Leitfähigkeit eines reinen (d.h. unbeschichteten bzw. unbehandelten) sulfidischen Elektrolytmaterials sowie eines erfindungsgemäßen beschichteten sulfidischen Elektrolytmaterials in Abhängigkeit der Temperatur. Es ist zu erkennen, dass - trotz der im Vergleich zum reinen (d.h. unbeschichteten bzw. unbehandelten) sulfidischen Elektrolytmaterials geringeren ionischen Leitfähigkeit des speziellen anorganisch-organischen Hybridpolymers - die Leitfähigkeiten des erfindungsgemäßen beschichteten sulfidischen Elektrolytmaterials und des reinen (d.h. unbeschichteten) sulfidischen Elektrolytmaterials über einen großen Druck- bzw. Temperaturbereich nahezu identisch sind. Der Zusatz von Lithium-Salzen zum anorganisch-organischen Hybridpolymer zur Erhöhung der ionischen Leitfähigkeit ist deshalb nicht nötig.

Fig. 6 zeigt das Diagramm eines "Lithium Stripping/Plating"-Tests mit variierenden Stromdichten mit einer symmetrischen Zelle (Cu-mesh/Li/beschichteter sulfidischer Elektrolyt/Li/Cu-mesh). Der beschichtete sulfidische Elektrolyt besteht dabei aus einem erfindungsgemäßen beschichteten Elektrolytmaterial. Es ist zu erkennen, dass die Beschichtung des sulfidischen Elektrolyten mit dem speziellen anorganisch-organischen Hybridpolymer zu einer erhöhten Stabilität gegenüber Lithium führt (vgl. B. Zheng et al., ACS Appl. Mater. Interfaces, 2018, 10, 25473-25482; Abbildung 3).

### Ausführungsbeispiel:

In einem 50 mL Kolben werden 3,0 g Li₁₀SnP₂S₁₂, 0,6 g einer Vorstufe eines anorganisch-organischen Hybridpolymers, 0,024 g Dibenzoylperoxid und 15,0 g Dichlormethan eingewogen. Anschließend wird die Suspension für 20 Minuten unter Rühren bei Raumtemperatur homogenisiert. Daraufhin wird auf eine Temperatur von 50 °C erhitzt und Dichlormethan abgetrennt. Nach vollständiger Abtrennung von Dichlormethan wird die Temperatur auf 80 °C erhöht und die Polymerisation der Vorstufe des anorganisch-organischen Hybridpolymers innerhalb von 16 Stunden durchgeführt. Erhalten wird ein erfindungsgemäßes mit einem anorganischen-organischen Hybridpolymer beschichtetes Elektrolytmaterial.

Bei der verwendeten Vorstufe des anorganisch-organischen Hybridpolymers handelt es sich um eine Vorstufe, die eine oder mehrere Struktureinheiten gemäß der Formel (I) umfasst oder daraus besteht. Die verwendete Vorstufe des anorganisch-organischen Hybridpolymers kann beispielsweise gemäß der folgenden zwei Varianten hergestellt werden (vgl. N. Boaretto et al., Journal of Power Sources, 2016, 325, 427-437.):

### Variante 1:

Me-TEG-PMDES (5 g, 0,015 mol), Vi-TEG-EMDES (1,69 g, 0,005 mol), H₂O (1,44 g, 0,08 mol), und Tetrabuthylammoniumfluorid-Trihydrate (TBAF, 0,095 g, 3 · 10⁻⁴ mol) wurden in 20 mL Diethylcarbonat gemischt. Die Lösung wurde für 3 Tage bei 50 °C gerührt. Die flüchtigen Bestandteile wurden unter reduziertem Druck entfernt, und der Rückstand in trockenem Diethylether gelöst und über Al₂O₃ filtriert. Daraufhin wurde der Diethylether entfernt und das Produkt bei 50 °C und 0,02 mbar für 24 h getrocknet. Erhalten wurde eine Vorstufe eines anorganisch-organischen Hybridpolymers.

| | |
|---|---|
| Vi-TEG-EMDES: | Triethylenglykol-α-vinyl-ω-ethyl-(methyl)diethoxysilanether |
| Me-TEG-PMDES: | Triethylenglykol-α-methyl-ω-propyl-(methyl)diethoxysilanether |

### Variante 2:

Me-TEG-PMDES (5 g, 0,015 mol), Vi-TEG-EMDES (5 g, 0,015 mol), H₂O (2,16 g, 0,12 mol), und Tetrabuthylammoniumfluorid Trihydrate (TBAF, 0,095 g, 3 · 10⁻⁴ mol) wurden in 20 mL Diethylcarbonat gemischt. Die Lösung wurde für 3 Tage bei 50 °C gerührt. Die flüchtigen Bestandteile wurden unter reduziertem Druck entfernt, und der Rückstand in trockenem Diethylether gelöst und über Al₂O₃ filtriert. Daraufhin wurde der Diethylether entfernt und das Produkt bei 50 °C und 0,02 mbar für 24 h getrocknet. Erhalten wurde eine Vorstufe eines anorganisch-organischen Hybridpolymers.

| | |
|---|---|
| Vi-TEG-EMDES: | Triethylenglykol-α-vinyl-ω-ethyl-(methyl)diethoxysilanether |
| Me-TEG-PMDES: | Triethylenglykol-α-methyl-ω-propyl-(methyl)diethoxysilanether |

## Patentansprüche

1. Beschichtetes Elektrolytmaterial, umfassend mindestens ein sulfidisches partikuläres Lithium-Ionen-leitfähiges Elektrolytmaterial, welches zumindest bereichsweise mindestens eine Beschichtung aufweist, die mindestens ein anorganisch-organisches Hybridpolymer enthält oder daraus besteht, wobei das mindestens eine anorganisch-organische Hybridpolymer aus mindestens einer vernetzbaren Vorstufe herstellbar ist, die eine oder mehrere Struktureinheiten gemäß der folgenden Formel (I) 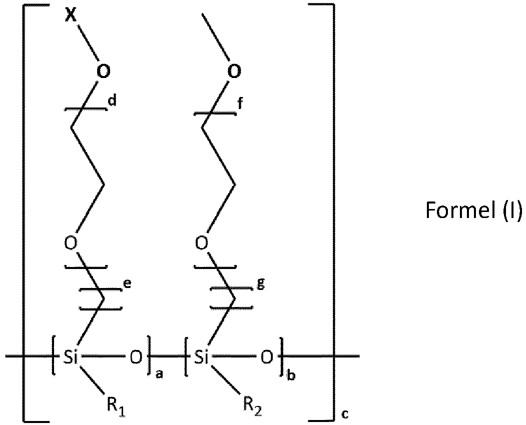 umfasst oder daraus besteht, wobei
X ausgewählt ist aus der Gruppe bestehend aus Vinyl und Epoxy,
R₁ ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
R₂ ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
a eine Zahl von 1 bis 20 ist,
b eine Zahl von 1 bis 20 ist,
c eine Zahl von 1 bis 30 ist,
d eine Zahl von 0 bis 20 ist,
e 2 oder 3 ist,
f eine Zahl von 1 bis 20 ist, und
g 2 oder 3 ist.

2. Beschichtetes Elektrolytmaterial gemäß Anspruch 1, **dadurch gekennzeichnet, dass** das mindestens eine sulfidische partikuläre Lithium-Ionen-leitfähige Elektrolytmaterial ausgewählt ist aus der Gruppe bestehend aus
- Materialien mit der allgemeinen Formel Li₁₁₋ₓ(M_{1-y}M'_{y})₂₋ₓP₁₊ₓ(S_{12-z}M"_{z}), wobei M ausgewählt ist aus der Gruppe bestehend aus Ge, Sn und Si, wobei M' ausgewählt ist aus der Gruppe bestehend aus Ge, Sn und Si, wobei M" ausgewählt ist aus der Gruppe bestehend aus O, Se, F, Cl, Br und I, wobei x eine Zahl von 0 bis 2 ist, wobei y eine Zahl von 0 bis 1 ist, und wobei z eine Zahl von 0 bis 3 ist, vorzugsweise Li₁₀SnP₂S₁₂,
- Thio-LISICON-Materialien mit der allgemeinen Formel Li₄₋ₓM₁₋ₓM'ₓS₄, wobei M ausgewählt ist aus der Gruppe bestehend aus Sn, Si, Ge und Zr, wobei M' ausgewählt ist aus der Gruppe bestehend aus P, Al, Zn und Ga, und wobei x eine Zahl von 0 bis 1 ist, vorzugweise Li₄GeS₄, Li₄SnS₄,
- den Thio-LISICON-Materialien Li₂GeS₃; Li₂ZnGeS₄; Li₄₋₂ₓZnₓGeS₄, wobei x eine Zahl von 0 bis 1 ist; Li₅GaS₄; Li_{4+x+y}(Ge_{1-y-x}Gaₓ)S₄, wobei x eine Zahl von 0 bis 1 ist und y eine Zahl von 0 bis 1 ist; Li₂₋ₓSn₁₋ₓAsₓS₄, wobei x eine Zahl von 0 bis 1 ist,
- Li-P-S-basierten Glasen und Glaskeramiken mit der allgemeinen Formel xLi₂S·(100-x)P₂S₅, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- Li-P-S-basierten Glasen und Glaskeramiken mit der allgemeinen Formel xLi₂S·(100-x)B₂S₃, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- Li-P-S-basierten Glasen und Glaskeramiken mit der allgemeinen Formel xLi₂S·(100-x)SiS₂, wobei x sich auf Molprozent bezieht und eine Zahl von 1 bis 100 ist, und wobei die Li-P-S-basierten Glase optional dotiert sind, vorzugsweise mit einem Stoff ausgewählt aus der Gruppe bestehend aus Li₃PO₄, Li₄SiO₄, Li₄GeO₄, LiBO₃, LiAlO₃, Li₃GaO₃, Li₃InO₃, LiBH₄, Lil, LiCl und Mischungen hiervon;
- dotierten Glaskeramiken ausgewählt aus der Gruppe bestehend aus Li₇P_{2,9}S_{10,85}Mo_{0,01}; Li₇P_{2,9}Mn_{0,1}S_{10,7}I_{0,3}; Li₇P₂S₈I; Li₆PS₅X, wobei X ausgewählt ist aus der Gruppe bestehend aus Cl, Br und I,
- Argyroditen und dotierten Argyroditen ausgewählt aus der Gruppe bestehend aus Li_{9,54}Si_{1,74}P_{1,44}S_{11,7}Cl_{0,3}, Li₁₀SiP₂S₁₂Cl_{0,3}, Li₁₁AlP₂S₁₂, Li₃P_{0,98}Sb_{0,02}S₃,₉₅O_{0,05}, Li₄GeS₄, 0,4LiI-0,24GeS₂-0,06Ga₂S₃-0,3Li₂S, 50Li₂S-50GeS₂, sowie
- Mischungen hiervon.

3. Beschichtetes Elektrolytmaterial gemäß einem der vorhergehenden Ansprüche, **dadurch gekennzeichnet, dass** das mindestens eine sulfidische partikuläre Lithium-lonen-leitfähige Elektrolytmaterial eine Primär-Partikelgröße, bestimmt mittels DIN ISO 22412, im Bereich von 50 nm bis 10 µm, bevorzugt im Bereich von 100 nm bis 500 nm, besonders bevorzugt im Bereich von 100 nm bis 300 nm, aufweist.

4. Beschichtetes Elektrolytmaterial gemäß einem der vorhergehenden Ansprüche, **dadurch gekennzeichnet, dass** die mindestens eine vernetzbare Vorstufe durch eine Hydrolyse-Kondensation-Reaktion von mindestens einem Polyether-funktionalisierten Alkoxysilan, vorzugsweise von mindestens zwei Polyether-funktionalisierten Alkoxysilanen, herstellbar ist, wobei das mindestens eine Polyether-funktionalisierte Alkoxysilan vorzugsweise ausgewählt ist aus der Gruppe bestehend aus Triethylenglykol-α-vinyl-ω-ethyl-(methyl)diethoxysilanether, Triethylenglykol-α-methyl-ω-propyl-(methyl)diethoxysilanether und Mischungen hiervon.

5. Beschichtetes Elektrolytmaterial gemäß einem der vorhergehenden Ansprüche, **dadurch gekennzeichnet, dass** die mindestens eine Beschichtung
- eine Schichtdicke im Bereich von 1 bis 700 nm, bevorzugt von 1 bis 500 nm, besonders bevorzugt von 1 bis 300 nm, ganz besonders bevorzugt von 1 bis 200 nm, aufweist, und/oder
- eine nanostrukturierte Beschichtung ist.

6. Beschichtetes Elektrolytmaterial gemäß einem der vorhergehenden Ansprüche, **dadurch gekennzeichnet, dass** das beschichtete Elektrolytmaterial eine Lithium-Ionenleitfähigkeit, bestimmt mittels temperaturabhängiger Impedanzspektroskopie, bei einer Temperatur von 25 °C im Bereich von 1 · 10⁻⁷ S/cm bis 1 S/cm, bevorzugt im Bereich von 1 · 10⁻⁶ S/cm bis 1 · 10⁻¹ S/cm, besonders bevorzugt im Bereich von 1 · 10⁻⁴ S/cm bis 1 · 10⁻¹ S/cm, aufweist.

7. Festkörperelektrolyt umfassend oder bestehend aus einem beschichteten Elektrolytmaterial gemäß einem der vorhergehenden Ansprüche.

8. Energiespeicher umfassend einen Festkörperelektrolyten gemäß Anspruch 7.

9. Verwendung eines beschichteten Elektrolytmaterials gemäß einem der Ansprüche 1 bis 6, eines Festkörperelektrolyten gemäß Anspruch 7 oder eines Energiespeichers gemäß Anspruch 8 in Fahrzeugen, vorzugsweise e-PKWs, e-LKWs, e-Bussen.

10. Verfahren zur Herstellung von beschichtetem Elektrolytmaterial gemäß einem der Ansprüche 1 bis 6, bei welchem
a) mindestens ein sulfidisches partikuläres Lithium-Ionen-leitfähiges Elektrolytmaterial mit mindestens einer vernetzbaren Vorstufe mindestens eines anorganisch-organischen Hybridpolymers zu einer Mischung vermischt wird, und
b) die in der Mischung vorliegende mindestens eine vernetzbare Vorstufe des mindestens einen anorganisch-organischen Hybridpolymers zu dem mindestens einen anorganisch-organischen Hybridpolymer vernetzt wird, wobei mit dem mindestens einen anorganisch-organischen Hybridpolymer beschichtetes Elektrolytmaterial entsteht,
wobei die mindestens eine vernetzbare Vorstufe eine oder mehrere Struktureinheiten gemäß der folgenden Formel (I) 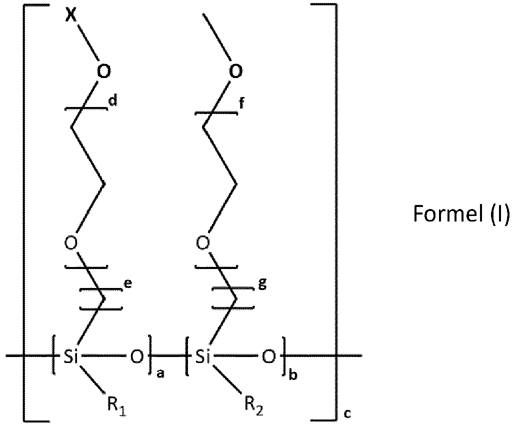
umfasst oder daraus besteht, wobei
X ausgewählt ist aus der Gruppe bestehend aus Vinyl und Epoxy,
R₁ ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
R₂ ausgewählt ist aus der Gruppe bestehend aus Alkyl, -O-Alkyl und -O-, wobei -O- eine verbrückende Gruppierung zu einem Si-Atom der gleichen Struktureinheit oder einer weiteren Struktureinheit gemäß der Formel (I) der mindestens einen vernetzbaren Vorstufe ist,
a eine Zahl von 1 bis 20 ist,
b eine Zahl von 1 bis 20 ist,
c eine Zahl von 1 bis 30 ist,
d eine Zahl von 0 bis 20 ist,
e 2 oder 3 ist,
f eine Zahl von 1 bis 20 ist, und
g 2 oder 3 ist.

11. Verfahren gemäß Anspruch 10, **dadurch gekennzeichnet, dass** die mindestens eine vernetzbare Vorstufe des mindestens einen anorganisch-organischen Hybridpolymers durch Reaktion von mindestens einem Polyether-funktionalisierten Alkoxysilan, vorzugsweise von mindestens zwei Polyether-funktionalisierten Alkoxysilanen, durch eine Hydrolyse-Kondensation-Reaktion hergestellt wird, wobei das mindestens eine Polyether-funktionalisierte Alkoxysilan vorzugsweise ausgewählt ist aus der Gruppe bestehend aus Triethylenglykol-α-vinyl-ω-ethyl-(methyl)diethoxysilanether, Triethylenglykol-α-methyl-ω-propyl-(methyl)diethoxysilanether und Mischungen hiervon.

12. Verfahren gemäß Anspruch 10 oder 11, **dadurch gekennzeichnet, dass** in Schritt a) zusätzlich ein Lösungsmittel, vorzugsweise Dichlormethan, verwendet wird und mit dem mindestens einen sulfidischen partikulären Lithium-Ionen-leitfähigen Elektrolytmaterial und der mindestens einen vernetzbaren Vorstufe des mindestens einen anorganisch-organischen Hybridpolymers vermischt wird, wobei das Lösungsmittel vor Schritt b) aus der Mischung entfernt wird.

13. Verfahren gemäß einem der Ansprüche 10 bis 12, **dadurch gekennzeichnet, dass** in Schritt a) zusätzlich mindestens ein Katalysator, vorzugsweise Dibenzoylperoxid, mit dem mindestens einen sulfidischen partikulären Lithium-lonen-leitfähigen Elektrolytmaterial und der mindestens einen vernetzbaren Vorstufe des mindestens einen anorganisch-organischen Hybridpolymers vermischt wird, wobei die Vernetzung in Schritt b) durch Polymerisation erfolgt.

14. Verfahren gemäß einem der Ansprüche 10 bis 13, **dadurch gekennzeichnet, dass** die Mischung in Schritt b) einer Temperaturbehandlung bei einer Temperatur im Bereich von 20 °C bis 140 °C, bevorzugt im Bereich von 60 °C bis 100 °C, besonders bevorzugt im Bereich von 70 °C bis 90 °C, für einen Zeitraum von 10 Minuten bis 72 Stunden, bevorzugt von 30 Minuten bis 36 Stunden, besonders bevorzugt von 60 Minuten bis 24 Stunden, unterzogen wird.

15. Verfahren gemäß einem der Ansprüche 10 bis 14, **dadurch gekennzeichnet, dass** das Vermischen in Schritt a) durch Rühren und/oder Mischen erfolgt, wobei durch das Rühren vorzugsweise eine homogene Mischung erhalten wird.

## Claims

1. Coated electrolyte material, comprising at least one sulfidic particulate lithium-ion-conductive electrolyte material, which has, at least in regions, at least one coating which contains or consists of at least one inorganic-organic hybrid polymer, wherein the at least one inorganic-organic hybrid polymer is preparable from at least one cross-linkable precursor which contains or consists of one or more structural units according to the following formula (I) 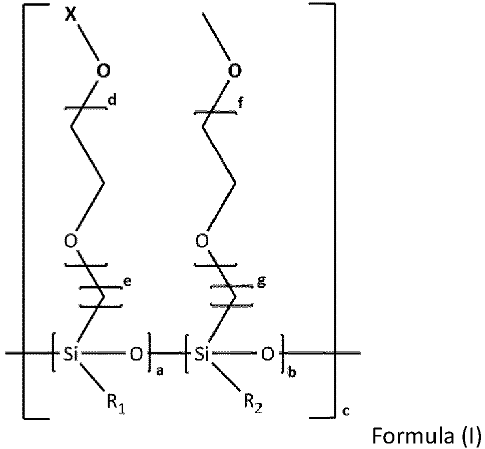 wherein
X is selected from the group consisting of vinyl and epoxy,
R₁ is selected from the group consisting of alkyl, -O-alkyl, and -O-, wherein -O- is a bridging group to an Si atom of the same structural unit or a further structural unit according to the formula (I) of the at least one cross-linkable precursor,
R₂ is selected from the group consisting of alkyl, -O-alkyl, and -O-, wherein -O- is a bridging group to an Si atom of the same structural unit or a further structural unit according to the formula (I) of the at least one cross-linkable precursor,
a is a number from 1 to 20,
b is a number from 1 to 20,
c is a number from 1 to 30,
d is a number from 0 to 20,
e is 2 or 3,
f is a number from 1 to 20, and
g is 2 or 3.

2. Coated electrolyte material according to claim 1, **characterized in that** the at least one sulfidic particulate lithium-ion-conductive electrolyte material is selected from the group consisting of
- materials having the general formula Li₁₁₋ₓ(M_{1-y}M'_{y})₂₋ₓP₁₊ₓ(S_{12-z}M"_{z}), wherein M is selected from the group consisting of Ge, Sn, and Si, wherein M' is selected from the group consisting of Ge, Sn, and Si, wherein M" is selected from the group consisting of O, Se, F, Cl, Br, and I, wherein x is a number from 0 to 2, wherein y is a number from 0 to 1, and wherein z is a number from 0 to 3, preferably Li₁₀SnP₂S₁₂,
- thio-LISICON materials having the general formula Li₄₋ₓM₁₋ₓM'ₓS₄, wherein M is selected from the group consisting of Sn, Si, Ge, and Zr, wherein M' is selected from the group consisting of P, Al, Zn, and Ga, and wherein x is a number from 0 to 1, preferably Li₄GeS₄, Li₄SnS₄,
- the thio-LISICON materials Li₂GeS₃; Li₂ZnGeS₄; Li₄₋₂ₓZnₓGeS₄, wherein x is a number from 0 to 1; Li₃GaS₄; Li_{4+x+y}(Ge_{1-y-x}Gaₓ)S₄, wherein x is a number from 0 to 1 and y is a number from 0 to 1; Li₂₋ₓSn₁₋ₓAsₓS₄, wherein x is a number from 0 to 1,
- Li-P-S-based glasses and glass ceramics having the general formula xLi₂S·(100-x)P₂S₅, wherein x relates to mole percentage and is a number from 1 to 100, and wherein the Li-P-S-based glasses are optionally doped, preferably with a substance selected from the group consisting of Li₃PO₄, Li₄SiO₄, Li₄GeO₄, LiBO₃, LiAlO₃, Li₃GaO₃, Li₃InO₃, LiBH₄, Lil, LiCl, and mixtures thereof;
- Li-P-S-based glasses and glass ceramics having the general formula xLi₂S·(100-x)B₂S₃, wherein x relates to mole percentage and is a number from 1 to 100, and wherein the Li-P-S-based glasses are optionally doped, preferably with a substance selected from the group consisting of Li₃PO₄, Li₄SiO₄, Li₄GeO₄, LiBO₃, LiAlO₃, Li₃GaO₃, Li₃InO₃, LiBH₄, Lil, LiCl, and mixtures thereof;
- Li-P-S-based glasses and glass ceramics having the general formula xLi₂S·(100-x)SiS₂, wherein x relates to mole percentage and is a number from 1 to 100, and wherein the Li-P-S-based glasses are optionally doped, preferably with a substance selected from the group consisting of Li₃PO₄, Li₄SiO₄, Li₄GeO₄, LiBO₃, LiAlO₃, Li₃GaO₃, Li₃InO₃, LiBH₄, Lil, LiCl, and mixtures thereof;
- doped glass ceramics selected from the group consisting of Li₇P_{2.9}5_{10.85}Mo_{0.01}; Li₇P_{2.9}Mn_{0.1}S_{10.7}I_{0.3}; Li₇P₂S₈I; Li₆PS₅X, wherein X is selected from the group consisting of Cl, Br, and I,
- argyrodites and doped argyrodites selected from the group consisting of Li_{9.54}Si_{1.74}P_{1.44}5_{11.7}Cl_{0.3}, Li₁₀SiP₂S₁₂Cl_{0.3}, Li₁₁AlP₂S₁₂, Li₃P_{0.98}Sb_{0.02}S_{3.95}O_{0.05}, Li₄GeS₄, 0.4LiI-0.24GeS₂-0.06Ga₂S₃-0.3Li₂S, 50Li₂5-50GeS₂, and
- mixtures thereof.

3. Coated electrolyte material according to any one of the preceding claims, **characterized in that** the at least one sulfidic particulate lithium-ion-conductive electrolyte material has a primary particle size, determined by means of DIN ISO 22412, in the range of 50 nm to 10 µm, preferably in the range of 100 nm to 500 nm, particularly preferably in the range of 100 nm to 300 nm.

4. Coated electrolyte material according to any one of the preceding claims, **characterized in that** the at least one cross-linkable precursor is preparable by means of a hydrolysis-condensation reaction of at least one polyether-functionalized alkoxysilane, preferably of at least two polyether-functionalized alkoxysilanes, wherein the at least one polyether-functionalized alkoxysilane is preferably selected from the group consisting of triethylene glycol α-vinyl ω-ethyl(methyl)diethoxysilane ether, triethylene glycol α-methyl ω-propyl (methyl)diethoxysilane ether, and mixtures thereof.

5. Coated electrolyte material according to any one of the preceding claims, **characterized in that** the at least one coating
- has a layer thickness in the range of 1 to 700 nm, preferably of 1 to 500 nm, particularly preferably of 1 to 300 nm, most particularly preferably of 1 to 200 nm, and/or
- is a nanostructured coating.

6. Coated electrolyte material according to any one of the preceding claims, **characterized in that** the coated electrolyte material has a lithium-ion conductivity, determined by means of temperature-dependent impedance spectroscopy, at a temperature of 25°C in the range of 1·10⁻⁷ S/cm to 1 S/cm, preferably in the range of 1·10⁻⁶ S/cm to 1 · 10⁻¹ S/cm, particularly preferably in the range of 1 · 10⁻⁴ S/cm to 1 · 10⁻¹ S/cm.

7. Solid-state electrolyte comprising or consisting of a coated electrolyte material according to any one of the preceding claims.

8. Energy storage comprising a solid-state electrolyte according to claim 7.

9. Use of a coated electrolyte material according to any one of claims 1 to 6, of a solid-state electrolyte according to claim 7, or of an energy storage according to claim 8, in vehicles, preferably electric cars, electric trucks, electric buses.

10. Method for preparing coated electrolyte material according to any one of claims 1 to 6, in which
a) at least one sulfidic particulate lithium-ion-conductive electrolyte material is mixed with at least one cross-linkable precursor of at least one inorganic-organic hybrid polymer to form a mixture, and
b) the at least one cross-linkable precursor of the at least one inorganic-organic hybrid polymer which is present in the mixture is cross-linked to form the at least one inorganic-organic hybrid polymer, wherein electrolyte material coated with the at least one inorganic-organic hybrid polymer results,
wherein the at least one cross-linkable precursor contains or consists of one or more structural units according to the following formula (I) 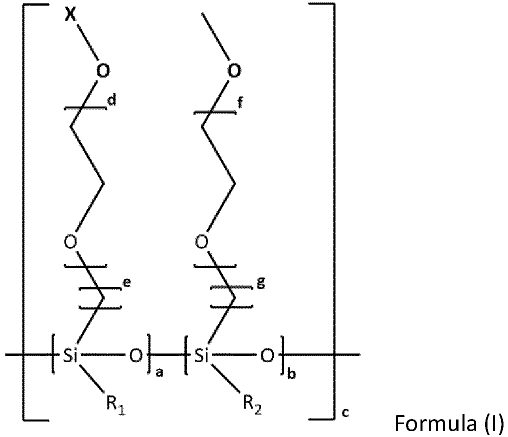
wherein
X is selected from the group consisting of vinyl and epoxy,
R₁ is selected from the group consisting of alkyl, -O-alkyl, and -O-, wherein -O- is a bridging group to an Si atom of the same structural unit or a further structural unit according to the formula (I) of the at least one cross-linkable precursor,
R₂ is selected from the group consisting of alkyl, -O-alkyl, and -O-, wherein -O- is a bridging group to an Si atom of the same structural unit or a further structural unit according to the formula (I) of the at least one cross-linkable precursor,
a is a number from 1 to 20,
b is a number from 1 to 20,
c is a number from 1 to 30,
d is a number from 0 to 20,
e is 2 or 3,
f is a number from 1 to 20, and
g is 2 or 3.

11. Method according to claim 10, **characterized in that** the at least one cross-linkable precursor of the at least one inorganic-organic hybrid polymer is prepared by means of a reaction of at least one poly-etherfunctionalized alkoxysilane, preferably at least two polyether-functionalized alkoxysilanes, by means of a hydrolysis-condensation reaction, wherein the at least one polyether-functionalized alkoxysilane is preferably selected from the group consisting of triethylene glycol α-vinyl ω-ethyl(methyl)diethoxysilane ether, triethylene glycol α-methyl ω-propyl (methyl)diethoxysilane ether, and mixtures thereof.

12. Method according to claim 10 or 11, **characterized in that** a solvent, preferably dichloromethane, is additionally used in step a) and is mixed with the at least one sulfidic particulate lithium-ion-conductive electrolyte material and the at least one cross-linkable precursor of the at least one inorganic-organic hybrid polymer, wherein the solvent is removed from the mixture before step b).

13. Method according to any one of claims 10 to 12, **characterized in that** at least one catalyst, preferably dibenzoyl peroxide, is additionally mixed, in step a), with the at least one sulfidic particulate lithium-ion-conductive electrolyte material and the at least one cross-linkable precursor of the at least one inorganic-organic hybrid polymer, wherein the cross-linking takes place in step b) by polymerization.

14. Method according to any one of claims 10 to 13, **characterized in that** the mixture is subjected to a heat treatment at a temperature in the range of 20°C to 140°C, preferably in the range of 60°C to 100°C, particularly preferably in the range of 70°C to 90°C, in step b) for a time period of 10 minutes to 72 hours, preferably of 30 minutes to 36 hours, particularly preferably of 60 minutes to 24 hours.

15. Method according to any one of claims 10 to 14, **characterized in that** the mixing in step a) takes place by stirring and/or mixing, wherein a homogeneous mixture is preferably obtained by stirring.

## Revendications

1. Matériau d'électrolyte revêtu, comprenant au moins un matériau d'électrolyte conducteur d'ions lithium particulaire sulfuré, lequel présente au moins par endroits au moins un revêtement qui contient ou est constitué d'au moins un polymère hybride inorganique-organique, dans lequel l'au moins un polymère hybride inorganique-organique peut être préparé à partir d'au moins un précurseur réticulable, qui comprend ou est constitué d'un ou plusieurs motifs structuraux selon la formule (I) suivante 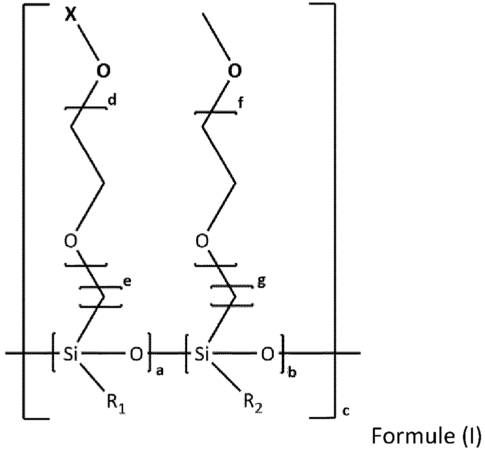 dans lequel
X est choisi dans le groupe constitué par le vinyle et l'époxy,
R₁ est choisi dans le groupe constitué par alkyle, -O-alkyle et -O-, dans lequel -O- est un groupement pontant avec un atome de Si du même motif structural ou un autre motif structural selon la formule (I) de l'au moins un précurseur réticulable,
R₂ est choisi dans le groupe constitué par alkyle, -O-alkyle et -O-, dans lequel -O- est un groupement pontant avec un atome de Si du même motif structural ou un autre motif structural selon la formule (I) de l'au moins un précurseur réticulable,
a est un nombre de 1 à 20,
b est un nombre de 1 à 20,
c est un nombre de 1 à 30,
d est un nombre de 0 à 20,
e est 2 ou 3,
f est un nombre de 1 à 20, et
g est 2 ou 3.

2. Matériau d'électrolyte revêtu selon la revendication 1, **caractérisé en ce que** l'au moins un matériau d'électrolyte conducteur d'ions lithium particulaire sulfuré est choisi dans le groupe constitué par
- les matériaux avec la formule générale Li₁₁₋ₓ(M₁-_{y}M'_{y})₂₋ₓP₁₊ₓ(S_{12-z}M"_{z}), où M est choisi dans le groupe constitué par Ge, Sn et Si, où M' est choisi dans le groupe constitué par Ge, Sn et Si, où M" est choisi dans le groupe constitué par O, Se, F, Cl, Br et I, où x est un nombre de 0 à 2, où y est un nombre de 0 à 1, et où z est un nombre de 0 à 3, de préférence Li₁₀SnP₂S₁₂,
- les matériaux Thio-LISICON avec la formule générale Li₄₋ₓM₁₋ₓMₓS₄, où M est choisi dans le groupe constitué par Sn, Si, Ge et Zr, où M' est choisi dans le groupe constitué par P, Al, Zn et Ga, et où x est un nombre de 0 à 1, de préférence Li₄GeS₄, Li₄SnS₄,
- les matériaux Thio-LISICON Li₂GeS₃; Li₂ZnGeS₄; Li₄₋₂ₓZnₓGeS₄, où x est un nombre de 0 à 1 ; Li₅GaS₄; Li_{4+x+y}(Ge_{1-y-x}Gaₓ) S₄, où x est un nombre de 0 à 1 et y est un nombre de 0 à 1 ; Li₂₋ₓSn₁₋ₓASₓS₄, où x est un nombre de 0 à 1,
- les verres à base de Li-P-S et les vitrocéramiques avec la formule générale xLi₂S (100-x)P₂S₅, où x se réfère au pourcentage molaire et est un nombre de 1 à 100, et dans lequel les verres à base de Li-P-S sont éventuellement dopés, de préférence avec une substance choisie dans le groupe constitué par Li₃PO₄, Li₄SiO₄, Li₄GeO₄, LiBO₃, LiAlO₃, Li₃GaO₃, Li₃InO₃, LiBH₄, Lil, LiCl et leurs mélanges ;
- les verres à base de Li-P-S et les vitrocéramiques avec la formule générale xLi₂S (100-x)B₂S₃, où x se réfère au pourcentage molaire et est un nombre de 1 à 100, et dans lequel les verres à base de Li-P-S sont éventuellement dopés, de préférence avec une substance choisie dans le groupe constitué par Li₃PO₄, Li₄SiO₄, Li₄GeO₄, LIBO₃, LiAlO₃, Li₃GaO₃, Li₃InO₃, LiBH₄, Lil, LiCl et leurs mélanges ;
- les verres à base de Li-P-S et les vitrocéramiques avec la formule générale xLi₂S (100-x)SiS₂, où x se réfère au pourcentage molaire et est un nombre de 1 à 100, et dans lequel les verres à base de Li-P-S sont éventuellement dopés, de préférence avec une substance choisie dans le groupe constitué par Li₃PO₄, Li₄SiO₄, Li₄GeO₄, LIBO₃, LlAlO₃, Li₃GaO₃, Li₃InO₃, LiBH₄, Lil, LiCl et leurs mélanges ;
- les vitrocéramiques dopées choisies dans le groupe constitué par Li₇P_{2,9}5_{10,85}Mo_{0,01}; Li₇P_{2,9}Mn_{0,1}S_{10,7}I_{10,3} ; Li₇P₂S₈I ; Li₆PS₅X, où X est choisi dans le groupe constitué par Cl, Br et I,
- les argyrodites et argyrodites dopées choisies dans le groupe constitué par Li_{9,54} Si_{1,74}P_{1,44}S_{11,7}Cl_{0,3}, Li₁₀SiP₂S₁₂Cl_{0,3}, Li₁₁AlP₂S₁₂, Li₃P_{0,98}Sb_{0,02}S_{3,95}O_{0,05}, Li₄GeS₄, 0,4LiI-0,24GeS₂-0,06Ga₂S₃-0,3Li₂S, 50Li₂S-50GeS₂, et
- leurs mélanges.

3. Matériau d'électrolyte revêtu selon l'une quelconque des revendications précédentes, **caractérisé en ce que** l'au moins un matériau d'électrolyte conducteur d'ions lithium particulaire sulfuré présente une taille de particules primaires, déterminée selon la norme DIN ISO 22412, dans la plage de 50 nm à 10 µm, de préférence dans la plage de 100 nm à 500 nm, de manière particulièrement préférée dans la plage de 100 nm à 300 nm.

4. Matériau électrolytique revêtu selon l'une quelconque des revendications précédentes, **caractérisé en ce que** l'au moins un précurseur réticulable peut être produit par une réaction d'hydrolyse-condensation d'au moins un alcoxysilane fonctionnalisé par un polyéther, de préférence d'au moins deux alcoxysilanes fonctionnalisés par un polyéther, dans lequel l'au moins un alcoxysilane fonctionnalisé par un polyéther est de préférence choisi dans le groupe constitué par l'éther de triéthylèneglycol-α-vinyl-ω-éthyl-(méthyl)diéthoxysilane, l'éther de triéthylèneglycol-α-méthyl-ω-propyl-(méthyl)diéthoxysilane et leurs mélanges.

5. Matériau électrolytique revêtu selon l'une quelconque des revendications précédentes, **caractérisé en ce que** l'au moins un revêtement
- présente une épaisseur de couche dans la plage de 1 à 700 nm, de préférence de 1 à 500 nm, de manière particulièrement préférée de 1 à 300 nm, idéalement de 1 à 200 nm, et/ou
- est un revêtement nanostructuré.

6. Matériau d'électrolyte revêtu selon l'une quelconque des revendications précédentes, **caractérisé en ce que** le matériau d'électrolyte revêtu présente une conductivité des ions lithium, déterminée par spectroscopie d'impédance dépendant de la température, à une température de 25 °C dans la plage de 1 · 10⁻⁷ S/cm à 1 S/cm, de préférence dans la plage de 1 · 10⁻⁶ S/cm à 1 · 10⁻¹ S/cm, de manière particulièrement préférée dans la plage de 1 10⁴ S/cm à 1 · 10⁻¹ S/cm.

7. Électrolyte solide comprenant ou constitué d'un matériau d'électrolyte revêtu selon l'une quelconque des revendications précédentes.

8. Accumulateur d'énergie comprenant un électrolyte solide selon la revendication 7.

9. Utilisation d'un matériau d'électrolyte revêtu selon l'une quelconque des revendications 1 à 6, d'un électrolyte solide selon la revendication 7 ou d'un accumulateur d'énergie selon la revendication 8 dans des véhicules, de préférence des voitures électriques, des camions électriques, des bus électriques.

10. Procédé pour la fabrication d'un matériau électrolytique revêtu selon l'une quelconque des revendications 1 à 6, selon lequel
a) au moins un matériau électrolytique conducteur d'ions lithium particulaire sulfuré est mélangé avec au moins un précurseur réticulable d'au moins un polymère hybride inorganique-organique en un mélange, et
b) l'au moins un précurseur réticulable de l'au moins un polymère hybride inorganique-organique présent dans le mélange est réticulé en l'au moins un polymère hybride inorganique-organique, dans lequel un matériau d'électrolyte revêtu de l'au moins un polymère hybride inorganique-organique est ainsi formé,
dans lequel l'au moins un précurseur réticulable comprend ou est constitué d'un ou plusieurs motifs structuraux selon la formule (I) suivante 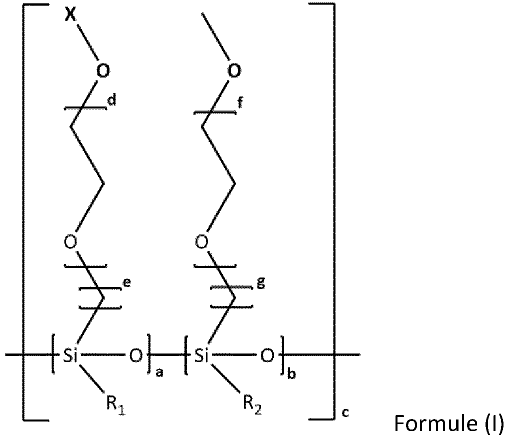
dans lequel
X est choisi dans le groupe constitué par le vinyle et l'époxy,
R₁ est choisi dans le groupe constitué par alkyle, -O-alkyle et-O⁻, dans lequel -O- est un groupement pontant avec un atome de Si du même motif structural ou un autre motif structural selon la formule (I) de l'au moins un précurseur réticulable,
R₂ est choisi dans le groupe constitué par alkyle, -O-alkyle et -O-, dans lequel -O- est un groupement pontant avec un atome de Si du même motif structural ou un autre motif structural selon la formule (I) de l'au moins un précurseur réticulable,
a est un nombre de 1 à 20,
b est un nombre de 1 à 20,
c est un nombre de 1 à 30,
d est un nombre de 0 à 20,
e est 2 ou 3,
f est un nombre de 1 à 20, et
g est 2 ou 3.

11. Procédé selon la revendication 10, **caractérisé en ce que** l'au moins un précurseur réticulable de l'au moins un polymère hybride inorganique-organique est produit par réaction d'au moins un alcoxysilane fonctionnalisé par un polyéther, de préférence d'au moins deux alcoxysilanes fonctionnalisés par un polyéther, par une réaction d'hydrolysecondensation, dans lequel l'au moins un alcoxysilane fonctionnalisé par un polyéther est de préférence choisi dans le groupe constitué par le triéthylèneglycol-α-vinyl-ω-éthyl-(méthyl)diéthoxysilane éther, le triéthylèneglycol-α-méthyl-ω-propyl-(méthyl)diéthoxysilane éther et leurs mélanges.

12. Procédé selon la revendication 10 ou 11, **caractérisé en ce que**, dans l'étape a), un solvant, de préférence du dichlorométhane, est en outre utilisé et est mélangé avec l'au moins un matériau électrolytique conducteur d'ions lithium particulaire sulfuré et l'au moins un précurseur réticulable de l'au moins un polymère hybride inorganique-organique, dans lequel le solvant est éliminé du mélange avant l'étape b).

13. Procédé selon l'une quelconque des revendications 10 à 12, **caractérisé en ce que**, dans l'étape a), au moins un catalyseur, de préférence du peroxyde de dibenzoyle, est mélangé en plus avec l'au moins un matériau électrolytique conducteur d'ions lithium particulaire sulfuré et l'au moins un précurseur réticulable de l'au moins un polymère hybride inorganique-organique, dans lequel la réticulation dans l'étape b) s'effectue par polymérisation.

14. Procédé selon l'une quelconque des revendications 10 à 13, **caractérisé en ce que** le mélange dans l'étape b) est soumis à un traitement thermique à une température dans la plage de 20 °C à 140 °C, de préférence dans la plage de 60 °C à 100 °C, de manière particulièrement préférée dans la plage de 70 °C à 90 °C, pendant une durée de 10 minutes à 72 heures, de préférence de 30 minutes à 36 heures, de manière particulièrement préférée de 60 minutes à 24 heures.

15. Procédé selon l'une quelconque des revendications 10 à 14, **caractérisé en ce que** le mélange à l'étape a) s'effectue par agitation et/ou mélange, dans lequel de préférence un mélange homogène est obtenu par l'agitation.
